# EUROPÄISCHE PATENTSCHRIFT

(11) **EP 3 818 280 B1**
(45) Veröffentlichungstag und Bekanntmachung des Hinweises auf die Patenterteilung: **03.07.2024**
(21) Anmeldenummer: 19727385.7
(22) Anmeldetag: 28.05.2019
(51) Int. Cl.: F16F 1/38, F16F 9/46

(54) **ELEKTROMAGNETISCHE STELLVORRICHTUNG INSBESONDERE ZUM ÖFFNEN UND SCHLIESSEN EINER VENTILVORRICHTUNG, VENTILVORRICHTUNG MIT EINER DERARTIGEN STELLVORRICHTUNG, REGELBARER SCHWINGUNGSDÄMPFER UMFASSEND EINE SOLCHE STELLVORRICHTUNG SOWIE KRAFTFAHRZEUG MIT EINEM DERARTIGEN SCHWINGUNGSDÄMPFER**
ELECTROMAGNETIC ACTUATING DEVICE PARTICULARLY FOR OPENING AND CLOSING A VALVE DEVICE, VALVE DEVICE HAVING AN ACTUATING DEVICE OF THIS KIND, CONTROLLABLE VIBRATION DAMPER COMPRISING AN ACTUATING DEVICE OF THIS KIND AND MOTOR VEHICLE HAVING A VIBRATION DAMPER OF THIS KIND
DISPOSITIF DE RÉGLAGE ÉLECTROMAGNÉTIQUE, EN PARTICULIER POUR OUVRIR ET FERMER UN DISPOSITIF SOUPAPE, DISPOSITIF SOUPAPE POURVU D'UN TEL DISPOSITIF DE RÉGLAGE, AMORTISSEUR DE VIBRATIONS RÉGLABLE COMPRENANT UN TEL DISPOSITIF DE RÉGLAGE AINSI QUE VÉHICULE AUTOMOBILE PRÉSENTANT UN TEL AMORTISSEUR DE VIBRATIONS

(30) Priorität: 06.07.2018 DE 102018116487
(43) Veröffentlichungstag der Anmeldung: 12.05.2021
(73) Patentinhaber: Kendrion (Villingen) GmbH, 78048 Villingen-Schwenningen (DE)
(72) Erfinder: BERGFELD, Björn, 72336 Balingen-Endingen (DE)
(74) Vertreter: Westphal, Mussgnug & Partner Patentanwälte mbB
(86) Internationale Anmeldenummer: PCT/EP2019/063841
(87) Internationale Veröffentlichungsnummer: WO 2020/007536

(56) Entgegenhaltungen:
- EP-A2- 2 628 974
- DE-A1- 19 722 216
- DE-A1-102007 035 542
- US-A1- 2007 062 588

## Beschreibung

Die vorliegende Erfindung betrifft eine elektromagnetische Stellvorrichtung insbesondere zum Öffnen und Schließen einer Ventilvorrichtung sowie eine Ventilvorrichtung mit einer derartigen Stellvorrichtung. Des Weiteren betrifft die Erfindung einen regelbaren Schwingungsdämpfer umfassend eine solche Stellvorrichtung sowie ein Kraftfahrzeug mit einem derartigen Schwingungsdämpfer.

Elektromagnetische Stellvorrichtungen werden unter anderem zum Öffnen und Schließen von Ventilen aller Art eingesetzt. Gemäß einem typischen Aufbau umfassen die elektromagnetischen Stellvorrichtungen eine bestrombare Spuleneinheit, mit welcher im bestromten Zustand ein entlang einer Längsachse der Stellvorrichtung bewegbar gelagerter Anker relativ zu einem Polkern zwischen einer eingefahrenen Stellung und einer ausgefahrenen bewegbar ist. Weiterhin weisen die elektromechanischen Stellvorrichtungen einen mit dem Anker zusammenwirkenden und entlang der Längsachse bewegbar gelagerten Stößel mit einem ersten Ende auf, mit welchem der Stößel mit einem Verschlusselement zum Öffnen und Schließen der Ventilvorrichtung zusammenwirkt. Während das erste Ende des Stößels üblicherweise aus der elektromechanischen Stellvorrichtung herausragt, befindet sich ein zweites Ende im Innern der elektromechanischen Stellvorrichtung und ist häufig vom Anker und/oder von der bestrombaren Spuleneinheit umgeben.

Wie bereits erwähnt, werden der Anker und der Stößel infolge einer Bestromung der bestrombaren Spule entlang der Längsachse verschoben. Die Ventilvorrichtung wird in vielen Fällen auf folgende Weise betrieben: Wird der Stößel zum Ventilsitz hin verschoben, wird das Verschlusselement in den Ventilsitz gedrückt und daher die Ventilvorrichtung geschlossen. Wird der Stößel vom Ventilsitz weg verschoben, öffnet sich die Ventilvorrichtung. Je nach Zustand wird der Durchfluss eines Druckmediums gesperrt oder ermöglicht. Als Druckmedium kann beispielsweise Druckluft oder eine Hydraulikflüssigkeit eingesetzt.

Als Rückstellelement wird häufig eine Feder eingesetzt, welche den Stößel in eine Endstellung bewegt, wenn die Spule nicht bestromt ist. Je nachdem, ob in dieser Endstellung die Ventilvorrichtung geöffnet oder geschlossen ist, handelt es sich um eine "normally-open" oder "normally-closed" Ventilvorrichtung. Der Vollständigkeit halber sei erwähnt, dass die Endstellung auch mittels eines Permanentmagnets, der auf den Anker wirkt, festgelegt werden kann.

Auf den Stößel wirken im Betrieb der elektromechanischen Stellvorrichtung zumindest die von Anker auf ihn übertragenen und von der bestrombaren Spuleneinheit erzeugten Magnetkräfte und die von der Feder erzeugten Rückstellkräfte. Insbesondere dann, wenn als Druckmedium eine Hydraulikflüssigkeit wie Öl eingesetzt wird, wirkt darüber hinaus eine vom Druck der Hydraulikflüssigkeit ausgehende Kraft auf den Stößel und das Verschlusselement. Diese Kraft soll im Folgenden als Fluidkraft bezeichnet werden.

Während die Rückstellkräfte der Feder anhand der Federkennlinie und die Magnetkräfte mittels der Stromstärke der Bestromung gut vorherbestimmbar sind, wirkt die Fluidkraft nicht nur auf den Stößel, sondern auch auf das Verschlusselement, wobei die Fluidkraft auch abhängig davon ist, ob das Verschlusselement in Kontakt mit dem Ventilsitz steht oder vom Ventilsitz entfernt angeordnet ist. Zudem ist die Fluidkraft in vielen Fällen abhängig vom Volumenstrom des Druckmediums durch die Ventilvorrichtung. Bereits eine kleinere Steigerung des Volumenstroms kann daher zu einem plötzlichen Anstieg der auf den Stößel und auf das Verschlusselement wirkenden Fluidkraft führen, die nicht ohne weiteres von der Magnetkraft und der Rückstellkraft kompensiert werden kann. Hieraus resultiert ein unkontrollierbares Öffnungs- und Schließverhalten des Verschlusselements. Es bedarf eines großen Regelungsaufwands, die die Magnetkräfte auf das Öffnungs- und Schließverhalten anzupassen, zudem müssen große Stromstärken verwendet werden, wodurch einerseits die elektromechanischen Stellvorrichtung unwirtschaftlich betrieben wird und andererseits relativ viel Wärme in der elektromechanischen Stellvorrichtung entsteht, die nur schlecht abgeführt werden und folglich zu einem erhöhten aus Thermobelastungen resultierenden Verschleiß führen kann. Darüber hinaus kann es Betriebszustände geben, bei denen die auf das Verschlusselement wirkenden Fluidkräfte plötzlich so stark ansteigen, dass das Verschlusselement überhaupt nicht mehr öffnen kann. Je nach Auslegung der Ventilvorrichtung können keine Gegenmaßnahmen ergriffen werden, so dass derartige Betriebszustände vermieden werden müssen, was den Anwendungsbereich der elektromechanischen Stellvorrichtung und der Ventilvorrichtung einschränkt.

Stand der Technik bilden die Druckschriften DE 10 2007 035 542 A1, EP 2 628 974 A2, US 2007 062 588 A1 und DE 197 22 216 A1.

Aufgabe einer Ausführungsform der vorliegenden Erfindung ist es, eine elektromechanischen Stellvorrichtung und eine Ventilvorrichtung zu schaffen, mit welchen ein kontrolliertes Öffnungs- und Schließverhalten für einen großen Bereich von Volumenströmen durch die Ventilvorrichtung bereitgestellt werden kann. Des Weiteren liegt einer Ausgestaltung der vorliegenden Erfindung die Aufgabe zugrunde, einen Schwingungsdämpfer mit einer derartigen Ventilvorrichtung für ein Kraftfahrzeug zu schaffen, der über einen großen Bereich von Volumenströmen durch die Ventilvorrichtung kontrolliert betrieben werden kann. Darüber hinaus soll ein Kraftfahrzeug vorgeschlagen werden, welches einen in einem großen Bereich von Volumenströmen kontrolliert betreibbaren Schwingungsdämpfer aufweist.

Diese Aufgabe wird mit den in den Ansprüchen 1, 2, 3 und 4 angegebenen Merkmalen gelöst. Vorteilhafte Ausführungsformen sind Gegenstand der Unteransprüche.

Eine Ausführungsform der Erfindung betrifft eine elektromagnetische Stellvorrichtung insbesondere zum Öffnen und Schließen einer Ventilvorrichtung, umfassend eine bestrombare Spuleneinheit, mit welcher im bestromten Zustand ein entlang einer Längsachse der Stellvorrichtung bewegbar gelagerter Anker zwischen einer eingefahrenen Stellung und einer ausgefahrenen bewegbar ist, einen mit dem Anker zusammenwirkenden und entlang der Längsachse bewegbar gelagerten Stößel mit einem ersten Ende, mit welchem der Stößel mit einem Verschlusselement zum Öffnen und Schließen der Ventilvorrichtung zusammenwirkt, und einem zweiten Ende, wobei der Stößel so angeordnet ist, dass er mit dem ersten Ende in eine erste Kammer hineinragt, in welcher ein Druckmedium unter einem erster Druck steht, und mit dem zweiten Ende in eine zweite Kammer hineinragt, in welcher das Druckmedium unter einem zweiten Druck steht.

Die erste Kammer und die zweite Kammer sind so gestaltet, dass sich die Drücke p1 und p2 voneinander unterscheiden. Sie können fluidisch so verbunden werden, dass sich die Drücke p1 und p2 in einer wählbaren Abhängigkeit zueinander insbesondere bei sich änderndem Volumenstrom insbesondere durch die erste Kammer ändern. Steigt beispielsweise der erste Druck p1 infolge eines steigenden Volumenstroms durch die erste Kammer stark an, kann dies zur Folge haben, dass auch der zweite Druck p2 ansteigt. Da der Stößel mit dem ersten Ende in die erste Kammer und mit dem zweiten Ende in die zweite Kammer hineinragt, wird die in der ersten Kammer auf das erste Ende des Stößels wirkende Fluidkraft zumindest anteilig von der in der zweiten Kammer auf das zweite Ende des Stößels wirkende Fluidkraft ausgeglichen oder aufgehoben. Der Stößel wird hierdurch fluidisch und insbesondere hydraulisch stabilisiert oder verspannt. Das Öffnungs- und Schließverhalten des Stößels und des mit dem Stößel zusammenwirkenden Verschlusselements kann infolgedessen über einen weiten Bereich des durch die erste Kammer strömenden Volumenstroms kontrolliert werden, ohne dass hierzu eine entsprechend große Magnetkraft bereitgestellt werden muss. Die Magnetkraft kann daher nur noch so groß gewählt werden, dass das Verschlusselement kontrolliert geöffnet oder geschlossen werden kann. Die Magnetkraft muss daher nicht zum Ausgleich der auf den Stößel wirkenden Fluidkräfte verwendet werden. Es genügt vorschlagsgemäß eine vergleichsweise kleine Magnetkraft, um den Stößel entlang der Längsachse zu verschieben und folglich die Ventilvorrichtung zu öffnen und zu schließen. Die elektromagnetische Stellvorrichtung kann mit vergleichsweise geringen Stromstärken und damit wirtschaftlicher betrieben werden.

Weiterhin weist der Stößel einen Kanal mit einer ersten Öffnung und einer zweiten Öffnung auf, wobei der Kanal vom Druckmedium durchströmbar ist. Das Druckmedium dient in diesem Fall insbesondere dann, wenn als Druckmedium eine Hydraulikflüssigkeit eingesetzt wird, als Wärmeträger, so dass die in der elektromagnetischen Stellvorrichtung im Betrieb der elektromechanischen Stellvorrichtung entstehende Wärme aus dem Stößel abgeführt werden kann. Der Verschleiß infolge von Thermobelastungen wird reduziert.

Die erste Öffnung in der ersten Kammer und die zweite Öffnung in der zweiten Kammer sind angeordnet, so dass eine Fluidkommunikation zwischen der ersten Kammer und der zweiten Kammer bereitgestellt wird. Die oben beschriebene Wärmeabfuhr ist weiterhin gewährleistet, zudem muss keine weitere Druckmedium-Leitung zwischen der ersten und der zweiten Kammer vorgesehen werden, um die Fluidkommunikation herzustellen. Aufgrund der Ausgestaltung des Kanals, beispielsweise Durchmesser oder Durchmesseränderungen, und die Größe und Ausrichtung der ersten und der zweiten Öffnung können die auf das erste Ende und das zweite Ende des Stößels wirkenden Fluidkräfte gezielt beeinflusst werden. Beispielsweise kann ein bestimmter Druckverlust beim Durchströmen des Kanals gezielt herbeigeführt werden. Wie bereits erwähnt, ist der Stößel entlang der Längsachse hin- und her bewegbar. Die Öffnungen können so angeordnet und dimensioniert werden, dass die für die Fluidkräfte wirksamen Flächen gezielt verändert werden. Die auf den Stößel wirkenden Fluidkräfte können daher eingestellt und ein kontrolliertes Öffnungs- und Schließverhalten des Stößels und folglich des mit ihm zusammenwirkenden Verschlusselements bereitgestellt werden.

Die erste Öffnung wirkt erfindungsgemäß mit einer ersten Blende fluidisch zusammen und/oder die zweite Öffnung fluidisch mit einer zweiten Blende. Das fluidische Zusammenwirken der ersten und/oder der zweiten Öffnung kann beispielsweise dadurch ermöglicht werden, dass das Druckmedium beim Eintritt in die erste und/oder zweite Kammer die erste bzw. zweite Blende durchströmen muss. Selbiges kann beim Verlassen der ersten bzw. der zweiten Blende vorgesehen sein. Hierdurch lassen sich bestimmte Druckverhältnisse zwischen dem ersten Druck und dem zweiten Druck einstellen, welche zu einem kontrollierten Öffnungs- und Schließverhalten des Stößels und folglich des mit ihm zusammenwirkenden Verschlusselements beitragen.

Ferner ist erfindungsgemäß vorgesehen, dass der Stößel zylinderförmig ausgestaltet ist und einen ersten Durchmesser aufweist, das Verschlusselement einen zweiten Durchmesser aufweist, der sich vom ersten Durchmesser unterscheidet, und die Größe der ersten Blende und/oder der zweiten Blende an den ersten Durchmesser und an den zweiten Durchmesser angepasst sein. In einigen Fällen kann es konstruktiv unumgänglich sein, unterschiedliche Durchmesser für das Verschlusselement und für den Stößel vorsehen zu müssen. Beispielsweise können die Lager, insbesondere die Gleitlager, die für die Lagerung des Stößels verwendet werden, in bestimmten Durchmessern verfügbar sein, die nicht dem Durchmesser des Verschlusselements entsprechen. Sonderanfertigungen des Verschlusselements oder der Lager können wirtschaftlich nicht akzeptabel sein. Beispielsweise dann, wenn der erste Durchmesser größer ist als das der zweite Durchmesser, können Ringflächen am ersten Ende des Stößels entstehen, die zu einer öffnenden Kraft führen, welche nicht vom Verschlusselement ausgeglichen wird. Wie eingangs erwähnt, können vergleichsweise kleine Erhöhungen im Volumenstrom zu sich plötzlich steigernden, auf den Stößel wirkenden Fluidkräften führen. Dieser Effekt ist dann besonders ausgeprägt, wenn der erste Durchmesser und der zweite Durchmesser unterschiedlich sind. Diesem Effekt kann durch die Verwendung der ersten und/oder der zweiten Blende entgegengewirkt werden. Die Anpassung der Blenden auf die jeweiligen Durchmesser des Verschlusselements und des Stößels ist eine vergleichsweise einfach umzusetzende technische Maßnahme.

Eine Ausgestaltung der Erfindung betrifft eine Ventilvorrichtung umfassend eine erste Kammer, in welcher ein Ventilsitz und ein Verschlusselement angeordnet sind, wobei der Ventilsitz mit dem Verschlusselement verschließbar ist, eine zweite Kammer, und eine elektromagnetische Stellvorrichtung nach einer der vorherigen Ausführungsformen, mit einem entlang der Längsachse bewegbar gelagerten Stößel mit einem ersten Ende, mit welchem der Stößel zum Öffnen und Schließen des Ventilsitzes mit dem Verschlusselement zusammenwirkt, und einem zweiten Ende, wobei der Stößel so angeordnet ist, dass er mit dem ersten Ende in die erste Kammer hineinragt, in welcher ein Druckmedium unter einem erster Druck steht, und mit dem zweiten Ende in eine zweite Kammer hineinragt, in welcher das Druckmedium unter einem zweiten Druck steht.

Die technischen Effekte und Vorteile, die sich mit der vorschlagsgemäßen Ventilvorrichtung erreichen lassen, entsprechen denjenigen, die für die vorliegende elektromagnetische Stellvorrichtung erörtert worden sind. Zusammenfassend soll auf Folgendes hingewiesen werden: Dadurch, dass der Stößel sowohl in die erste Kammer als auch in die zweite Kammer hineinragt, wirken sich gegenseitig zumindest teilweise aufhebende Fluidkräfte auf den Stößel. Wie erwähnt, können sich die Fluidkräfte schon bei kleineren Volumenströmen durch die Ventilvorrichtung stark erhöhen, was zu einem unkontrollierten Öffnungs- und Schließverhalten des Stößels und des mit ihm zusammenwirkenden Verschlusselements führt. Mit der vorschlagsgemäßen Möglichkeit, diese Fluidkräfte an beiden Enden des Stößels wirken und sich zumindest teilweise aufheben zu lassen, führt zu einer hydraulischen Verspannung des Stößels und zu einem kontrollierten Öffnungs- und Schließverhalten des Stößels und des mit ihm zusammenwirkenden Verschlusselements, ohne dass große Magnetkräfte bereitgestellt werden müssen.

Eine Ausführung der Erfindung betrifft einen regelbarer Schwingungsdämpfer, insbesondere für Kraftfahrzeuge, mit einem Arbeitszylinder, einem im Arbeitszylinder hin- und her bewegbaren Kolben, der den Arbeitszylinder in einen ersten Arbeitsraum und einen zweiten Arbeitsraum unterteilt, wobei der erste Arbeitsraum und der zweite Arbeitsraum über jeweils eine Druckmedium-Leitung mit einer Ventilvorrichtung nach der zuvor beschriebenen Ausgestaltung zum Regeln des Schwingungsdämpfers verbunden sind.

Eine Ausbildung der Erfindung betrifft ein Kraftfahrzeug mit einem Schwingungsdämpfer nach der zuvor beschriebenen Ausführung.

Die technischen Effekte und Vorteile, die sich mit dem vorschlagsgemäßen Schwingungsdämpfer und dem vorschlagsgemäßen Kraftfahrzeug erreichen lassen, entsprechen denjenigen, die für die vorliegende elektromagnetische Stellvorrichtung und die vorliegende Ventilvorrichtung erörtert worden sind. Zusammenfassend soll auf Folgendes hingewiesen werden: Dadurch, dass der Stößel sowohl in die erste Kammer als auch in die zweite Kammer hineinragt, wirken sich gegenseitig zumindest teilweise aufhebende Fluidkräfte auf den Stößel. Wie erwähnt, können sich die Fluidkräfte schon bei kleineren Volumenströmen durch die Ventilvorrichtung stark erhöhen, was zu einem unkontrollierten Öffnungs- und Schließverhalten des Stößels und des mit ihm zusammenwirkenden Verschlusselements führt. Mit der vorschlagsgemäßen Möglichkeit, diese Fluidkräfte an beiden Enden des Stößels wirken und sich zumindest teilweise aufheben zu lassen, führt zu einer hydraulischen Verspannung des Stö-ßels und zu einem kontrollierten Öffnungs- und Schließverhalten des Stößels und des mit ihm zusammenwirkenden Verschlusselements, ohne dass große Magnetkräfte bereitgestellt werden müssen.

Beispielhafte Ausführungsformen der Erfindung werden im Folgenden unter Bezugnahme auf die beigefügten Zeichnungen näher erläutert. Es zeigen
- Figur 1: einen Schaltplan eines Hydrauliksystems eines ersten Ausführungsbeispiels eines Schwingungsdämpfers,
- Figur 2: eine prinzipielle Darstellung einer Ventil ersten Ausführungsbeispiels einer erfindungsgemäßen elektromagnetischen Stellvorrichtung in einem ersten Betriebszustand, die im in Figur 1 dargestellten Hydrauliksystem integriert ist,
- Figur 3: die in Figur 2 dargestellten Stellvorrichtung in einem zweiten Betriebszustand, und
- Figur 4: eine prinzipielle Darstellung eines Kraftfahrzeugs mit einem Hydrauliksystem eines zweiten Ausführungsbeispiels eines Schwingungsdämpfers.

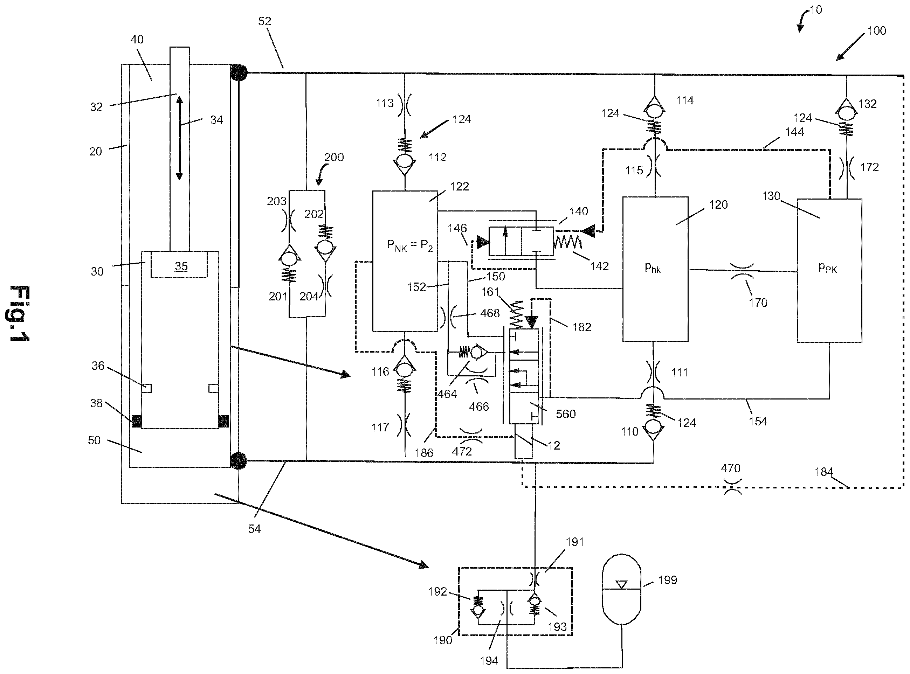

Figur 1 zeigt ein erstes Ausführungsbeispiel eines regelbaren Schwingungsdämpfers 10 anhand eines Schaltplans eines Hydrauliksystems. Der Schwingungsdämpfer 10, der beispielsweise an die Radaufhängung eines Rades eines Kraftfahrzeuges montiert ist, um die Dämpfung der Radaufhängung und damit die Dämpfung des Fahrzeuges beim Fahren einzustellen, verfügt über ein Dämpferrohr, das im Folgenden als Arbeitszylinder 20 bezeichnet ist. In diesem Arbeitszylinder 20 ist ein Kolben 30, der an einer Kolbenstange 32 befestigt ist, hin- und herbewegbar. Dabei ist der Kolben 30 mit der Radaufhängung des Kraftfahrzeuges gekoppelt. Die Hin- und Herbewegung des Kolbens 30 ist durch einen Bewegungspfeil 34 in der Figur 1 markiert. Wie ersichtlich, kann sich der Kolben 30 in dem Arbeitszylinder 20 beim hin- und her bewegen, nämlich einmal nach oben und ein anderes Mal nach unten. Im Folgenden wird bei einem sich nach oben bewegenden Kolben 30 von einem Ziehen und bei einem sich nach unten bewegenden Kolben 30 von einem Drücken gesprochen. Demzufolge befinden sich oberhalb des Kolbens 30 ein erster Arbeitsraum 40, der als "Zugraum" bezeichnet wird, und unterhalb des Kolbens 30 ein zweiter Arbeitsraum 50, der als "Druckraum" bezeichnet wird.

Der erste Arbeitsraum 40 (Zugraum) und der zweite Arbeitsraum 50 (Druckraum) sind mit einem Hydrauliksystem 100 verbunden, in welchem ein Druckmedium geführt wird, bei dem es sich um eine Hydraulikflüssigkeit wie Öl handeln soll. Prinzipiell kann das Hydrauliksystem aber auch als ein Pneumatiksystem ausgeführt sein und Druckluft als Druckmedium verwendet werden. Aus Gründen einer einfacheren Darstellmöglichkeit ist in Figur 1 das Hydrauliksystem 100 als außerhalb des Arbeitszylinders 20 angeordnet dargestellt. Allerdings ist dies nur aus Darstellungsgründen so gewählt. Das gesamte Hydrauliksystem 100 sitzt vielmehr innerhalb des topfförmig ausgebildeten Kolbens 30 des Schwingungsdämpfers.

Das Hydrauliksystem umfasst eine erste Druckmedium-Leitung 52, welche mit dem ersten Arbeitsraum 40 verbunden ist, und eine zweite Druckmedium-Leitung 54, die an den zweiten Arbeitsraum 50 angeschlossen ist. Hierfür verfügt der Kolben 30 über in Figur 1 lediglich schematisch dargestellte Bohrungen 36, über welche der Bauraum 35 innerhalb des Kolbens 30 mit dem ersten Arbeitsraum 40 (Zugraum) hydraulisch in Verbindung steht. Zusätzlich sind der erste Arbeitsraum 40 (Zugraum) und der zweite Arbeitsraum 50 (Druckraum) über eine am Außenumfang des Kolbens 30 umlaufende Radialdichtung 38 abgedichtet. Die vordere Stirnseite des Kolbens 30 steht deshalb über eine geeignete Öffnung mit dem zweiten Arbeitsraum 50 (Druckraum) hydraulisch in Verbindung.

Das an die beiden Druckmedium-Leitungen 52, 54 geschaltete Hydrauliksystem 100 verfügt über eine Brückenschaltung mit vier Rückschlagventilen 110, 112, 114, 116. Diese Rückschlagventile 110, 112, 114, 116 sind kreuzweise in Durchlassrichtung geschaltet, wobei die Verbindung eines ersten Brückenzweiges mit den zwei zueinander entgegengesetzt geschalteten Rückschlagventilen 110, 114 eine Hochdruckkammer 120 ausbildet und die Verbindung des zweiten Brückenzweiges mit den zwei weiteren zueinander entgegengesetzten Rückschlagventilen 112, 116 zu einer Niederdruckkammer 122 führt. Wie die Figur 1 deutlich zeigt, sind das erste Rückschlagventil 110 und das vierte Rückschlagventil 116 an die untere Druckmedium-Leitung 54 angeschlossen und stehen deshalb mit dem zweiten Arbeitsraum 50 (Druckraum) in Verbindung. Das erste Rückschlagventil 110 ist in Durchlassrichtung zu dem zweiten Arbeitsraum 50 (Druckraum) geschaltet. Das vierte Rückschlagventil 116 ist dagegen in Sperrrichtung zu dem zweiten Arbeitsraum 50 geschaltet. Das zweite Rückschlagventil 112 und das dritte Rückschlagventil 114 sind dagegen mit der oberen Druckmedium-Leitung 52 in Verbindung. Hierbei ist das zweite Rückschlagventil 112 in Sperrrichtung zu dem ersten Arbeitsraum 40 (Zugraum) geschaltet und das dritte Rückschlagventil 114 in Durchlassrichtung.

Wie die Darstellung in Figur 1 weiter zeigt, befinden sich in Reihe zu den vier Rückschlagventilen 110, 112, 114, 116 jeweils Hauptblenden 111, 113, 115, 117. Die erste Hauptblende 111 befindet sich zwischen dem ersten Rückschlagventil 110 und der Hochdruckkammer 120. Die zweite Hauptblende 113 befindet sich zwischen der ersten Druckmedium-Leitung 52 und dem zweiten Rückschlagventil 112. Die dritte Hauptblende 115 befindet sich zwischen der Hochdruckkammer 120 und dem dritten Rückschlagventil 114. Schließlich befindet sich die vierte Hauptblende 117 zwischen der zweiten Druckmedium-Leitung 54 und dem vierten Rückschlagventil 116. Vorzugsweise sind die vier Rückschlagventile 110, 112, 114, 116 der Brückenschaltung mit einstellbaren Federelementen 124 versehen. Hierdurch kann das Öffnungsverhalten der einzelnen Rückschlagventile 110, 112, 114, 116 voreingestellt gewählt werden, je nachdem, wie die Federkraft der einstellbaren Federelemente 124 ausgelegt ist.

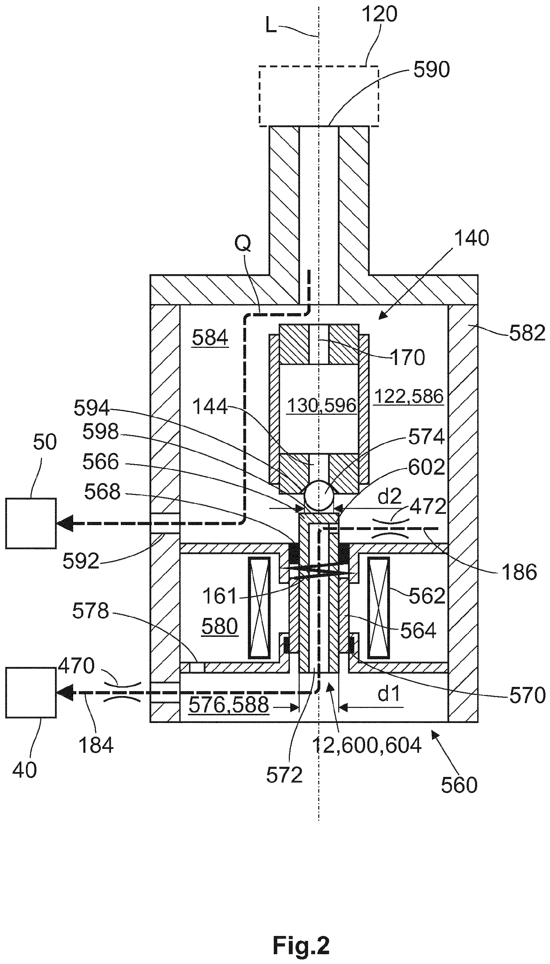

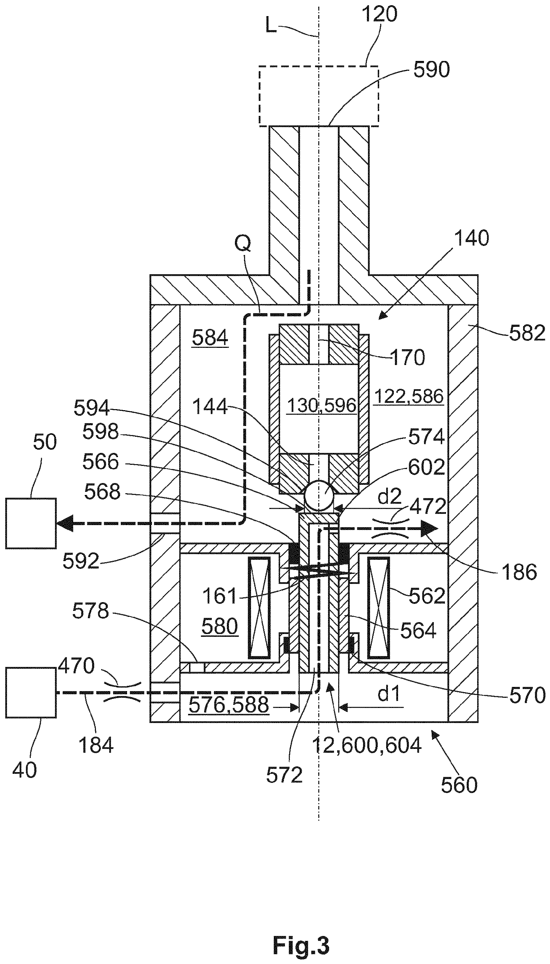

Das Hydrauliksystem 100 verfügt darüber hinaus über einen Hauptschieber 140, eine erfindungsgemäße elektromagnetische Ventilvorrichtung 560 sowie über eine Pilotkammer 130, auch als Pilotdruckkammer bezeichnet. Die Ventilvorrichtung 560 ist in den Figuren 2 und 3 näher dargestellt und umfasst eine elektromagnetische Stellvorrichtung 12 mit einem Elektromagnet .

Die Pilotkammer 130 ist an die erste Druckmedium-Leitung 52 über ein fünftes Rückschlagventil 132 geschaltet. Dieses fünfte Rückschlagventil 132 befindet sich, wie das dritte Rückschlagventil 114, in Durchlassrichtung zum ersten Arbeitsraum 40 (Zugraum). Die Pilotkammer 130 ist mit der Hochdruckkammer 120 über eine fünfte Hauptblende 170 hydraulisch in Verbindung. Eine sechste Hauptblende 172 ist zwischen das fünfte Rückschlagventil 132 und die Pilotkammer 130 geschaltet.

Die Ventilvorrichtung 560 ist zwischen die Niederdruckkammer 122 und die Pilotkammer 130 geschaltet und als 3/3-Ventil ausgeführt, welches proportional arbeitet. Die Niederdruckkammer 122 steht über zwei Verbindungsleitungen 150, 152 mit der Ventilvorrichtung 560 in Verbindung. Während die erste Verbindungsleitung 150 keine weiteren Hydraulikelemente aufweist, sind in der zweiten Verbindungsleitung 152 ausgehend von der Ventilvorrichtung 560 ein Rückschlagventil 464 und eine sechste Hauptblende 466 parallel geschaltet. Dem Rückschlagventil 464 und der sechsten Hauptblende 466 in Reihe geschaltet ist eine siebte Hauptblende 468.

Eine weitere Zuleitung 154 befindet sich zwischen der Ventilvorrichtung 560 und der Pilotkammer 130. Wie in dem Ausführungsbeispiel von Figur 1, arbeitet die Ventilvorrichtung 560 gegen eine Federeinrichtung 161 und gegen einen von der Pilotkammer 130 kommenden Druck, der über eine von der Zuleitung 154 abzweigende Steuerleitung 182 parallel zur Federkraft der Federeinrichtung 161, gegen welche die Stellvorrichtung 12 arbeitet, gerichtet ist. Die Hauptblenden 466, 468 und das Rückschlagventil 464 haben den Zweck, bei Stromausfall eine mittlere Dämpfercharakteristik am Schwingungsdämpfer 10 einzustellen (Failsafe).

Der Hauptschieber 140 ist als ein 2/2-Ventil ausgeführt, ist jedoch ein ausschließlich hydraulisch arbeitendes Ventil. Der Hauptschieber 140 verbindet die Niederdruckkammer 122 mit der Hochdruckkammer 120. Der Hauptschieber 140 arbeitet einmal gegen eine Federeinrichtung 142 und gegen einen über die Steuerleitung 144 kommenden Druck der Pilotkammer 130. Andererseits ist der Hauptschieber 140 auf seiner gegenüberliegenden Seite von einer von der Hochdruckkammer 120 kommenden Steuerleitung 146 beeinflusst.

Der Vollständigkeit halber ist noch zu erwähnen, dass der in Figur 1 dargestellte regelbare Schwingungsdämpfer 10 zusätzlich ein Bodenventil 190 im Boden des Arbeitszylinders 20 aufweist. Dieses Bodenventil 190 ist an sich bekannt bei Schwingungsdämpfern und ist zwischen die untere Druckmedium-Leitung 54 und einen Tank 199 geschaltet. Das Bodenventil 190 weist hierfür beispielsweise zwischen der unteren Druckmedium-Leitung 54 und dem Tank 199 eine erste Tankblende 191 auf, die mit der unteren Druckmedium-Leitung 54 in Verbindung steht. An die erste Tankblende 191 sind auf der der Druckmedium-Leitung 54 abgewandten Seite zwei antiparallel geschaltete Rückschlagventilen 192, 193 gelegt, wobei zusätzlich noch eine zweite Tankblende 194 parallel geschaltet ist.

Schließlich ist zwischen die beiden Druckmedium-Leitungen 52, 54 noch ein ebenfalls an sich bekanntes und sogenanntes Blow-Off-Ventil 200 geschaltet. Dieses Blow-Off-Ventil 200 dient dazu, eine maximal erreichbare Dämpferkraft an dem Schwingungsdämpfer 10 einzustellen. Hierfür besteht, wie gezeigt, das Blow-Off-Ventil 200 z.B. aus zwei antiparallel geschalteten Rückschlagventilen 201, 202, denen jeweils eine Blow-Off-Blende 203, 204 vorgeschaltet ist.

Die Wirkungsweise des regelbaren Schwingungsdämpfers von Figur 1 ist Folgende.

Es wird zunächst davon ausgegangen, dass sich der Kolben 30 nach oben bewegt und sich damit der erste Arbeitsraum 40 (Zugraum) verkleinert. Diese Betriebsweise wird im Folgenden als Zugbetrieb bezeichnet. Hierdurch steigt der Druck im ersten Arbeitsraum 40 (Zugraum) mit immer weiterer Bewegung des Kolbens 30 an. Der Druck in der Druckmedium-Leitung 52 steigt. Das zweite Rückschlagventil 112 befindet sich in Sperrrichtung, sodass dieser Druck nicht an die Niederdruckkammer 122 gelangen kann. Allerdings ist das dritte Rückschlagventil 114 in Durchlassrichtung geschaltet, sodass beim Überwinden der Federkraft des einstellbaren Federelementes 124 des Rückschlagventils 114 dieses öffnet und der Druck der Druckmedium-Leitung 52 in der Hochdruckkammer 120 ansteht. Zusätzlich befindet sich das fünfte Rückschlagventil 132 zur Pilotkammer 130 in Durchlassrichtung. Aufgrund der Verbindung zwischen der Hochdruckkammer 120 und der Pilotkammer 130 stellt sich ein über die Hauptblenden 170, 172 bestimmter Druck in der Pilotkammer 130 ein, wobei der über die Ventilvorrichtung 560 von der Niederdruckkammer 122 kommende Druck in der Pilotkammer 130 als Gegendruck ansteht. Über eine geeignete Bestromung kann die Ventilvorrichtung 560 gesteuert werden, sodass sich der letztlich in der Pilotkammer 130 einstellende Druck in Abhängigkeit von der Bestromung der Ventilvorrichtung 560 einstellt. Dieser in der Pilotkammer 130 wirkende Druck wird über die Steuerleitung 144 dem Hauptschieber 140 zugeführt, sodass der Druck in der Pilotkammer 130 die Stellung des Hauptschieber 140s 140 mit beeinflusst. Hierdurch kann durch entsprechende Bestromung der Ventilvorrichtung 560 die Dämpfercharakteristik des Schwingungsdämpfers bei Zugbelastung des Kolbens 30 eingestellt werden.

Betrachtet man nun die entgegengesetzte Bewegung des Kolbens 30, also in Richtung nach unten (Druckbetrieb), so erhöht sich der Druck in der zweiten Druckmedium-Leitung 54. In diesem Fall befindet sich das vierte Rückschlagventil 116 in seiner Sperrstellung und das erste Rückschlagventil 110 zur Hochdruckkammer 120 in Durchlassrichtung. In diesem Fall steht die Hochdruckkammer 120 über die fünfte Hauptblende 170 mit der Pilotkammer 130 in Verbindung und es stellt sich ein ähnlicher Wirkungsmechanismus wie oben bei der Druckbelastung ein.

In Figur 2 ist ein erstes Ausführungsbeispiel der erfindungsgemäßen Ventilvorrichtung 560 anhand einer prinzipiellen und ausschnittsweisen Darstellung näher gezeigt.

Die Ventilvorrichtung 560 umfasst ein Gehäuse 582, welches einen Hohlraum 584 umschließt. Dieser Hohlraum 584 ist in eine erste Kammer 586 und eine zweite Kammer 588 unterteilt. Die erste Kammer 586 weist einen Eingang 590 und einen Ausgang 592 auf, so dass die erste Kammer 586 von einem nicht dargestellten Druckmedium wie Luft oder eine Hydraulikflüssigkeit durchströmbar ist. Der Eingang 590 steht im dargestellten Beispiel mit der Hochdruckkammer 120 in Verbindung (vgl. Figur 1). Die erste Kammer 586 wird von der bereits erwähnten Niederdrucckammer 122 gebildet.

Die Strömung des Druckmediums zwischen dem Eingang 590 und dem Ausgang 592 stellt einen Hauptvolumenstrom Q durch die Ventilvorrichtung 560 dar. In der ersten Kammer 586 ist ein Ventilsitz 594 angeordnet, welcher mit einem Verschlusselement 574 verschlossen und geöffnet werden kann. Im geöffneten Zustand kann das Druckmedium in eine dritte Kammer 596 strömen, die im bereits erwähnten Hauptschieber 140 angeordnet ist, mit welchem der Eingang 590 geöffnet und verschlossen werden kann. Die dritte Kammer 596 wird von der ebenfalls bereits erwähnten Pilotkammer 130 gebildet.

Zwischen dem Ventilsitz 594 und der dritten Kammer 596 ist die Steuerleitung 144 ausgebildet und zwischen der dritten Kammer 596 und dem Eingang 590 ist die fünfte Hauptblende 170 angeordnet, die eine drosselnde Wirkung auf das sie durchströmende Druckmedium hat.

Die Stellvorrichtung 12 umfasst eine bestrombare Spuleneinheit 562 auf, mit welcher ein Anker 564 entlang einer Längsachse L der Stellvorrichtung 12 bewegbar ist. Mit dem Anker 564 ist ein Stößel 566, mitunter auch als Achse bezeichnet, fest verbunden, so dass der Stößel 566 dieselben Bewegungen wie der Anker 564 ausführt. Damit sich der Anker 564 und der Stößel 566 entlang der Längsachse L bewegen können, sind ein erstes Lager 568 und ein zweites Lager 570 vorgesehen, die beispielsweise als Gleitlager ausgebildet sein können.

Der Stößel 566 weist ein erstes Ende 598 und ein zweites Ende 600 auf. Der Stößel 566 ist so angeordnet, dass sich sein zum Verschlusselement 574 weisendes erstes Ende 598 in der ersten Kammer 586 bzw. in der Niederdruckkammer 122 befindet, während sein vom Verschlusselement 574 wegweisendes zweite Ende 600 in der zweiten Kammer588 angeordnet ist, die im dargestellten Beispiel von einer Magnetkammer 576 gebildet wird. Die Magnetkammer 576 ist über eine Durchlassöffnung 578 mit einem die Spuleneinheit 562 umgebenden Spulenraum 580 verbunden, so dass im Spulenraum 580 und in der Magnetkammer 576 derselbe Druck herrscht.

Um eine Fluidverbindung zwischen der ersten Kammer 586 und der zweiten Kammer 588 herstellen zu können, weist der Stößel 566 einen Kanal 572 mit einer ersten Öffnung 602 und einer zweiten Öffnung 604 auf. Die erste Öffnung 602 ist in der ersten Kammer 586 und die zweite Öffnung 604 in der zweiten Kammer 588 angeordnet. Die von der ersten Öffnung 602 definierte Ebene verläuft parallel zur Längsachse L, während die von der zweiten Öffnung 604 definierte Ebene senkrecht zur Längsachse L verläuft.

Über die erste Öffnung 602 wirkt der Kanal 572 fluidisch mit einer ersten Blende 472 und über die zweite Öffnung 604 fluidisch mit einer zweiten Blende 470 zusammen. Wie aus der Figur 1 zu erkennen, ist die erste Blende 472 in einer ersten Steuerleitung 184 und die zweite Blende 470 in einer zweiten Steuerleitung 186 angeordnet.

Der Stößel 566 wirkt mit dem Verschlusselement 574 zusammen, welches Teil des Hauptschiebers 140 ist. Mit dem Verschlusselement 574 kann die Verbindung zwischen der Pilotkammer 130 und der Niederdruckkammer 122 geöffnet und geschlossen werden. Im dargestellten Beispiel ist das Verschlusselement 574 kugelförmig ausgestaltet.

Der Stößel 566 weist einen Durchmesser d1 und das kugelförmige Verschlusselement 574 einen Durchmesser d2 auf. Der Durchmesser d1 kann beispielsweise 3 oder 4 mm und der Durchmesser d2 2,3 mm betragen. In jedem Fall ist der Durchmesser d1 größer als der Durchmesser d2. Zudem ist der Durchmesser der ersten Blende 472 größer als der Durchmesser der zweiten Blende 470.

Unabhängig davon, ob sich der Schwingungsdämpfer 10 im Druckbetrieb oder im Zugbetrieb befindet, stellt sich ein Hauptvolumenstrom Q von der Druckkammer 120 durch die Niederdruckkammer 122 ein, sofern der Hauptschieber 140 geöffnet ist. Von der Niederdruckkammer 122 fließt das Druckmedium im Druckbetrieb weiter zum ersten Arbeitsraum 40 und im Zugbetrieb zum Zweiten Arbeitsraum 50 (vgl. Figuren 2 und 3).

Dies hat zur Folge, dass verschiedene Drücke auf den Stößel 566 wirken, nämlich der Druck pNK der Niederdruckkammer 122, welcher einem ersten Druck p1 entspricht, und einem zweiten Druck p2 der Magnetkammer 576.

Wie bereits erläutert, ist der Durchmesser der ersten Blende 472 größer als der Durchmesser der zweiten Blende 470. Im in Figur 2 dargestellten Druckbetrieb fließt das Druckmedium zudem aus der Niederdruckkammer 122 durch die Steuerleitung 186 und die erste Blende 472 in den Kanal 572 und anschließend in die Magnetkammer 576 und von dort durch die Steuerleitung 184 und die zweite Blende 470 in den ersten Arbeitsraum 40.

Im in Figur 3 dargestellten Zugbetrieb fließt das Druckmedium aus dem ersten Arbeitsraum 40 durch die Steuerleitung 184 und die zweite Blende 470 in die Magnetkammer 576 und von dort durch den Kanal 572 und durch die Steuerleitung 186 und die erste Blende 472 in die Niederdruckkammer 122. Von dort fließt das Druckmedium wie für den Hauptvolumenstrom Q beschrieben in den zweiten Arbeitsraum 50.

Im Druckbetrieb ergeben sich schließende Kräfte auf den Stößel 560, da sich aufgrund der Tatsache, dass die Blende 472 den im Vergleich zur Blende 470 größeren Durchmesser aufweist, der Staudruck in der Magnetkammer 576 erhöht. Hierdurch wird die auf die zum Schließelement 574 hinzeigende Ringfläche des Stö-ßels 566 wirkende öffnende Kraft mehr als kompensiert und der Stößel 566 öffnet durch die leichte hydraulische Verspannung kontrollierter über dem Hauptvolumenstrom Q. Die von den Spuleneinheit 562 aufzubringende Magnetkraft kann hierdurch kleiner sein, was die Energieeffizienz der geregelten Schwingungsdämpfers 10 verbessert.

Im Zugbetrieb wird der Kanal 572 in umgekehrter Richtung durchflossen. Auch hier ergeben sich schließende Kräfte auf den Stößel 566, da der Druck pHK der Hochdruckkammer 120 auch in der Magnetkammer 576 anliegen würde und somit gleich dem zweiten Druck p2 wäre, wenn das Druckmedium nicht die erste Blende 472 durchströmen müsste. Ohne die erste Blende 472 wäre die Schließkraft sehr groß und es bestünde die Gefahr, dass die Stellvorrichtung 12 überhaupt nicht öffnen würde. Durch eine geeignete Wahl der Größe der ersten Blende 472 kann der zweite Druck p2 so eingestellt werden, dass die Schließkraft den gewünschten Wert aufweist.

Mit steigendendem Hauptvolumenstrom Q steigen sowohl der erste Druck p1 in der ersten Kammer 586 bzw. der Niederdruckkammer 122 als auch der zweite Druck p2 in der Magnetkammer 576, wodurch sich die Stellvorrichtung 12 automatisch stabilisiert.

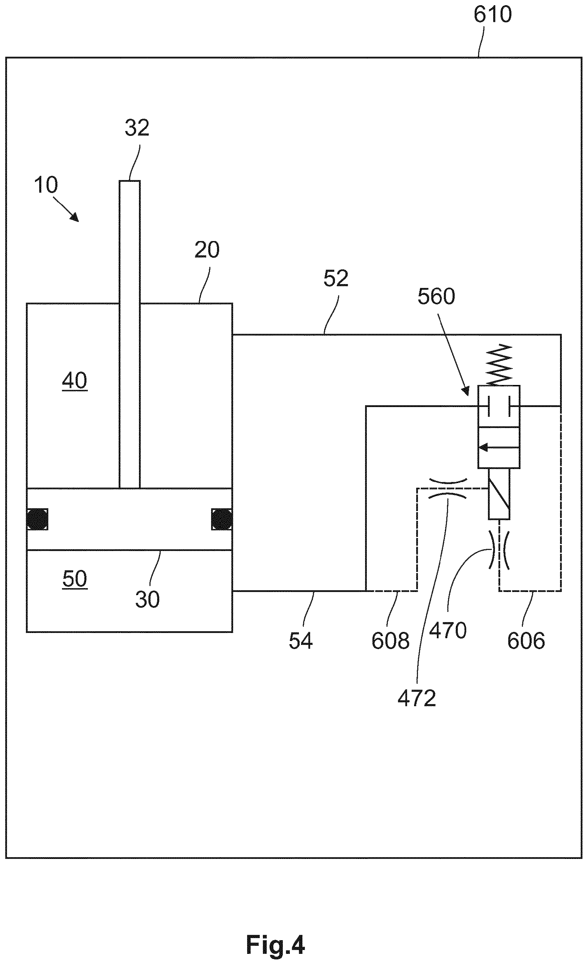

Figur 4 zeigt eine prinzipielle Darstellung eines Kraftfahrzeugs 610 mit einem Hydrauliksystem eines zweiten Ausführungsbeispiels eines Schwingungsdämpfers 10. Die Ventilvorrichtung 560 ist als ein 2/2-Ventil ausgeführt. Im Übrigen ist die Ventilvorrichtung 560 genauso aufgebaut wie in den Figuren 2 und 3 dargestellt.

Aus der mit dem ersten Arbeitsraum 40 verbundenen ersten Druckmedium-Leitung 52 zweigt eine Steuerleitung 606 ab, in welcher die zweite Blende 470 angeordnet ist. Die Steuerleitung 606 mündet in die in Figur 4 nicht explizit dargestellte zweite Kammer 588 (siehe Figuren 2 und 3). Weiterhin ist eine weitere Steuerleitung 608 vorgesehen, welche von der zweiten Druckmedium-Leitung 54 ausgeht und in die erste Kammer 586 (siehe Figuren 2 und 3) mündet. Die erste Blende 472 ist in der Steuerleitung 608 angeordnet.

### Bezugszeichenliste

- 10: Regelbarer Schwingungsdämpfer
- 12: Elektromagnetische Stellvorrichtung
- 20: Arbeitszylinder
- 30: Kolben
- 32: Kolbenstange
- 34: Bewegungspfeil
- 35: Bauraum
- 36: Bohrungen
- 38: Dichtung
- 40: erster Arbeitsraum (Zugraum)
- 50: zweiter Arbeitsraum (Druckraum)
- 52: Druckmittelleitung
- 54: Druckmittelleitung
- 100: Hydrauliksystem
- 110: erstes Rückschlagventil
- 111: erste Hauptblende
- 112: zweites Rückschlagventil
- 113: zweite Hauptblende
- 114: drittes Rückschlagventil
- 115: dritte Hauptblende
- 116: viertes Rückschlagventil
- 117: vierte Hauptblende
- 120: Hochdruckkammer
- 122: Niederdruckkammer
- 124: einstellbares Federelement
- 130: Pilotkammer
- 132: fünftes Rückschlagventil
- 140: Hauptschieber
- 142: Federeinrichtung
- 144: Steuerleitung
- 146: Steuerleitung
- 150: erste Verbindungsleitung
- 152: zweite Verbindungsleitung
- 154: Zuleitung
- 161: Federeinrichtung
- 170: fünfte Hauptblende
- 172: sechste Hauptblende
- 182: Steuerleitung
- 184: erste Steuerleitung
- 186: zweite Steuerleitung
- 190: Bodenventil
- 191: erste Tankblende
- 192: Rückschlagventil
- 193: Rückschlagventil
- 194: zweite Tankblende
- 199: Tank
- 200: Blow-Off-Ventil
- 201: Rückschlagventil
- 202: Rückschlagventil
- 203: Blow-Off-Blende
- 204: Blow-Off-Blende
- 464: Rückschlagventil
- 466: Hauptblende
- 468: Hauptblende
- 470: zweite Blende
- 472: erste Blende
- 560: Ventilvorrichtung
- 562: Spuleneinheit
- 564: Anker
- 566: Stößel
- 568: erstes Lager
- 570: zweites Lager
- 572: Kanal
- 574: Verschlusselement
- 576: Magnetkammer
- 578: Durchlassöffnung
- 580: Spulenraum
- 582: Gehäuse
- 584: Hohlraum
- 586: erste Kammer
- 588: zweite Kammer
- 590: Eingang
- 592: Ausgang
- 594: Ventilsitz
- 596: dritte Kammer
- 598: erstes Ende
- 600: zweites Ende
- 602: erste Öffnung
- 604: zweite Öffnung
- 606: Steuerleitung
- 608: Steuerleitung
- 610: Kraftfahrzeug

- L: Längsachse

## Patentansprüche

1. Elektromagnetische Stellvorrichtung insbesondere zum Öffnen und Schließen einer Ventilvorrichtung (560), umfassend
- eine bestrombare Spuleneinheit (562), mit welcher im bestromten Zustand ein entlang einer Längsachse (L) der Stellvorrichtung (12) bewegbar gelagerter Anker (564) zwischen einer eingefahrenen Stellung und einer ausgefahrenen bewegbar ist,
- einen mit dem Anker (564) zusammenwirkenden und entlang der Längsachse (L) bewegbar gelagerten Stößel (566) mit einem ersten Ende (598), mit welchem der Stößel (566) mit einem Verschlusselement (574) zum Öffnen und Schließen der Ventilvorrichtung (560) zusammenwirkt, und einem zweiten Ende (600),
- wobei der Stößel (566) so angeordnet ist, dass er mit dem ersten Ende (598) in eine erste Kammer (586) hineinragt, in welcher ein Druckmedium unter einem ersten Druck (p1) steht, und mit dem zweiten Ende (600) in eine zweite Kammer (588) hineinragt, in welcher das Druckmedium unter einem zweiten Druck (p2) steht,
- der Stößel (566) einen Kanal (572) mit einer ersten Öffnung (602) und einer zweiten Öffnung (604) aufweist und der Kanal (572) vom Druckmedium durchströmbar ist,
- wobei die erste Öffnung (602) in der ersten Kammer (586) und die zweite Öffnung (604) in der zweiten Kammer (588) angeordnet ist, so dass eine Fluidkommunikation zwischen der ersten Kammer (586) und der zweiten Kammer (588) bereitgestellt wird,
- wobei die erste Öffnung (602) mit einer ersten Blende (472) fluidisch zusammenwirkt und/oder die zweite Öffnung (604) fluidisch mit einer zweiten Blende (470) zusammenwirkt,
- wobei der Stößel (566) zylinderförmig ausgestaltet ist und einen ersten Durchmesser (d1) aufweist,
- das Verschlusselement (574) einen zweiten Durchmesser (d2) aufweist, der sich vom ersten Durchmesser (d1) unterscheidet, und
- die Größe der ersten Blende (472) und/oder der zweiten Blende (470) an den ersten Durchmesser (d1) und an den zweiten Durchmesser (d2) angepasst sind,
**dadurch gekennzeichnet, dass** der erste Durchmesser (d1) größer als der zweite Durchmesser (d2) ist.

2. Ventilvorrichtung (560), umfassend
- eine erste Kammer (586), in welcher ein Ventilsitz (594) und ein Verschlusselement (574) angeordnet sind, wobei der Ventilsitz (594) mit dem Verschlusselement (574) verschließbar ist,
- eine zweite Kammer (588), und
- eine elektromagnetische Stellvorrichtung (12) nach einem der vorherigen Ansprüche, mit einem entlang der Längsachse (L) bewegbar gelagerten Stößel (566) mit einem ersten Ende (598), mit welchem der Stößel (566) zum Öffnen und Schließen des Ventilsitzes (594) mit dem Verschlusselement (574) zusammenwirkt, und einem zweiten Ende (600),
- wobei der Stößel (566) so angeordnet ist, dass er mit dem ersten Ende (598) in die erste Kammer (586) hineinragt, in welcher ein Druckmedium unter einem ersten Druck (p1) steht, und mit dem zweiten Ende (600) in eine zweite Kammer (588) hineinragt, in welcher das Druckmedium unter einem zweiten Druck (p2) steht.

3. Regelbarer Schwingungsdämpfer, insbesondere für Kraftfahrzeuge, mit
- einem Arbeitszylinder (20),
- einem im Arbeitszylinder (20) hin- und her bewegbaren Kolben (30), der den Arbeitszylinder (20) in einen ersten Arbeitsraum (40) und einen zweiten Arbeitsraum (50) unterteilt, wobei
- der erste Arbeitsraum (40) und der zweite Arbeitsraum (50) über jeweils eine Druckmedium-Leitung (52, 54) mit einer Ventilvorrichtung (560) nach Anspruch 2 zum Regeln des Schwingungsdämpfers (10) verbunden sind.

4. Kraftfahrzeug (610), mit einem regelbaren Schwingungsdämpfer (10) nach Anspruch 4.

## Claims

1. Electromagnetic actuating device, in particular for the opening and closing of a valve assembly (560), comprising
- a coil unit (562), which can be supplied with a current, by means of which, when in the energized state, an anchor (564) which is moveably mounted along a longitudinal axis (L) of the actuating device (12), can be moved between a retracted position and an extended position,
- a tappet (566), which interacts with the anchor (564) and which is movably mounted along the longitudinal axis (L), having a first end (598) with which the tappet (566) interacts with a closing element (574) for the opening and closing of the valve assembly (560), and having a second end (600),
- wherein the tappet (566) is arranged such that it extends with the first end (598) into a first chamber (586), in which there is a pressure medium which is under a first pressure (p1), and extends with the second end (600) into a second chamber (588), in which the pressure medium is under a second pressure (p2),
- the tappet (566) comprises a channel (572), having a first opening (602) and a second opening (604), and the pressure medium can flow through the channel (572),
- wherein the first opening (602) is arranged in the first chamber (586) and the second opening (604) is arranged in the second chamber (588) such that a fluid communication is provided between the first chamber (586) and the second chamber (588),
- wherein the first opening (602) interacts fluidically with a first trim (472) and/or the second opening (604) interacts fluidically with a second trim (470),
- wherein the tappet (566) is implemented in a cylindrical shape and comprises a first diameter (d1),
- the closing element (574) comprises a second diameter (d2) which differs from the first diameter (d1), and
- the size of the first trim (472) and/or of the second trim (470) is adapted to the first diameter (d1) and to the second diameter (d2),
**characterized in that** the first diameter (d1) is larger than the second diameter (d2).

2. Valve assembly (560), comprising
- a first chamber (586), in which a valve seat (594) and a closing element (574) are arranged, wherein the valve seat (594) can be closed with the closing element (574),
- a second chamber (588), and
- an electromagnetic actuating device (12) in accordance with any of the preceding claims, having a tappet (566), which is moveably mounted along the longitudinal axis (L), having a first end (598), with which the tappet (566) interacts with the closing element ( 574) for the closing and opening of the valve seat (594), and having a second end (600),
- wherein the tappet (566) is arranged such that it extends with a first end (598) into the first chamber (586), in which a pressure medium is under a first pressure (p1), and with the second end (600) into a second chamber (588), in which the pressure medium is under a second pressure (p2).

3. Adjustable vibration damper, in particular for motor vehicles, having
- a working cylinder (20),
- a piston (30), which can move back and forth in the working cylinder (20) and which divides the working cylinder (20) into a fir working chamber (40) and a second working chamber (50), wherein
- the first working chamber (40) and the second working chamber (50) are each connected by means of a respective pressure medium line (52, 54) to a valve assembly (560) in accordance with claim 2 for the adjustment of the vibration damper (10).

4. Motor vehicle (610) having an adjustable vibration damper (10) in accordance with claim 4.

## Revendications

1. Dispositif de réglage électromagnétique notamment pour ouvrir et fermer un dispositif de soupape (560) comprenant :
- une première unité de bobine (562) alimentée en courant, et qui déplace, à l'état alimenté, un induit (564) monté mobile selon un axe longitudinal (L) du dispositif de réglage (12) entre une position rentrée et une position sortie,
- un poussoir (566) coopérant avec l'induit (564) et mobile selon l'axe longitudinal (L), ayant une première extrémité (598) par laquelle le poussoir (566) coopère avec un élément d'obturation (574) pour ouvrir et fermer le dispositif de soupape (560) et une seconde extrémité (600),
- le poussoir (566) étant disposé pour pénétrer avec sa première extrémité (598), dans une première chambre (586) avec un milieu à une première pression (p1) et avec sa seconde extrémité (600) dans une seconde chambre (588) dans laquelle le milieu sous pression est à une seconde pression (p2),
- le poussoir (566) ayant un canal (572) avec une première ouverture (602) et une seconde ouverture (604), le canal (572) étant traversé par un milieu sous pression,
- la première ouverture (602) étant dans la première chambre (586) et la seconde ouverture (604) étant dans la seconde chambre (588) de façon à réaliser une communication de fluide entre la première chambre (586) et la seconde chambre (588),
- la première ouverture (602) étant en coopération fluidique avec un premier diaphragme (472) et/ou la seconde ouverture (604) étant en coopération fluidique avec un second diaphragme (470),
dispositif dans lequel
- le poussoir (566) est de forme cylindrique avec un premier diamètre (d1),
- l'élément d'obturation (574) a un second diamètre (d2) différent du premier diamètre (d1), et
- les dimensions du premier diaphragme (472) et/ou du second diaphragme (470) sont adaptées au premier diamètre (d1) et au second diamètre (d2),
dispositif **caractérisé en ce que**
le premier diamètre (d1) est supérieur au second diamètre (d2).

2. Dispositif de soupape (560) comprenant :
- une première chambre (586) munie d'un siège de soupape (594) et d'un élément d'obturation (574),
* le siège de soupape (594) se fermant avec l'élément d'obturation (574),
- une seconde chambre (588), et
- un dispositif de réglage électromagnétique (12) selon la revendication précédente, avec un poussoir (566) mobile selon l'axe longitudinal (L), et ayant une première extrémité (598) par laquelle le poussoir (566) coopère pour l'ouverture et la fermeture du siège de soupape (594) avec l'élément d'obturation (574) et une seconde extrémité (600),
- le poussoir (566) étant disposé pour venir avec la première extrémité (598) dans la première chambre (586) contenant un milieu sous pression à une première pression (p1) et par la seconde extrémité (600) dans une seconde chambre (588) contenant un milieu sous pression à une seconde pression (p2).

3. Amortisseur d'oscillations, réglable notamment pour des véhicules automobiles comprenant :
- un vérin (20),
- un piston (30) mobile alternativement dans le vérin (20) et qui subdivise le vérin (20) en une première chambre (40) et une seconde chambre (50),
- la première chambre (40) et la seconde chambre (50) étant reliées par une conduite de milieu sous pression (52, 54) à un dispositif de soupape (560) selon la revendication 2 pour réguler l'amortisseur d'oscillations (10).

4. Véhicule automobile (610) comportant un amortisseur réglable (10) selon la revendication 3.
